# EUROPEAN PATENT SPECIFICATION

(11) **EP 1 086 185 B1**
(45) Date of publication and mention of the grant of the patent: **23.05.2007**
(21) Application number: 99930135.1
(22) Date of filing: 01.06.1999
(51) Int. Cl.: C09J 4/06, C08F 290/12

(54) **ADHESIVE FORMULATIONS**
KLEBSTOFFZUSAMMENSETZUNG
FORMULATIONS D'ADHESIF

(30) Priority: 12.06.1998 US 89115 P
(43) Date of publication of application: 28.03.2001
(73) Proprietor: LORD CORPORATION, Cary, NC 27512-8012 (US)
(72) Inventor: HUANG, Jian-Ping, Apex, NC 27502 (US); RIGHETTINI, Robin, Apex, NC 27502 (US); DENNIS, Frances, G., Cary, NC 27511 (US)
(74) Representative: Dunlop, Brian Kenneth Charles
(86) International application number: PCT/US1999/012119
(87) International publication number: WO 1999/064529

(56) References cited:
- EP-A- 0 487 058
- WO-A-97/39074
- US-A- 4 223 115
- US-A- 4 243 500
- US-A- 4 569 968
- US-A- 5 641 834

## Description

### FIELD OF THE INVENTION

The present invention relates to improved peel strength and improved failure mode of polymerizable or curable reactive adhesives, particularly acrylic adhesives. The invention also relates to improved surface tack and open time of polymerizable or curable reactive adhesives.

### BACKGROUND OF THE INVENTION

Acrylic structural adhesives are well known articles of commerce which are extensively used commercially for bonding metal and plastic materials. Acrylic structural adhesives have found growing use in the automotive industry where the adhesive bonding of metal parts is replacing welding and mechanical fastening techniques. However, these applications give rise to unique requirements not easily met by previously available adhesives. These requirements include high bond strength and improved failure mode.

Acrylic adhesives typically comprise a mixture of one or more olefinic reactive monomers such as methyl methacrylate or methacrylic acid and curing agents, with cure or polymerization being effected through a free radical polymerization mechanism. The adhesives preferably contain one or more polymeric materials which may or may not be reactive, that is, capable of being polymerized per se or at least capable of interpolymerizing with the reactive monomers, such as grafting onto or crosslinking the growing polymers from the reactive monomer polymerization. In addition, the adhesives can contain other additives for improving adhesion to substrate materials, environmental resistance, impact strength, flexibility, heat resistance, and the like.

P.C.T. Publication WO 97/39074 discloses the use of at least one polymeric material which can act as a toughening agent in an acrylic adhesive such as polychloroprene, polymer-in-monomer syrup, chlorosulphonated polyethylene rubber, copolymers of butadiene and at least one monomer copolymerizable therewith, for example, styrene, acrylonitrile, methacrylonitrile (e.g. poly(butadiene-(meth)acrylonitrile or poly(butadiene-(meth)acrylonitrile-styrene) and mixtures thereof; as well as modified elastomeric polymeric materials, such as butadiene homopolymers and copolymers as noted above modified by copolymerization therewith of trace amounts of up to about 5 percent by weight of the elastomeric material of at least one functional monomer (such as acrylic acid, methacrylic acid, maleic anhydride, fumaric acid, styrene, and methyl methacrylate to give, for example, methacrylate-terminated polybutadiene homopolymers and/or copolymers). Also disclosed is a redox catalyst system that includes certain para-halogenated aniline reducing agents.

U.S. Patent No. 4,769,419 ("the '419 patent"), incorporated herein by reference, discloses structural adhesive compositions for metal-metal bonding applications. The adhesives include as tougheners olefinic terminated liquid rubbers which are reacted with monoisocyanate compounds. These tougheners represented by formula I as shown in column 4 and claim 1 of the '419 patent are referred to herein as "urethane modified olefinic-terminated liquid elastomer produced from a carboxylic acid-terminated alkadiene" or, alternatively, as "isocyanate-capped methacrylate-terminated polyalkadiene produced from a carboxylic acid-terminated polyalkadiene". The '419 patent further describes acrylic adhesives with olefinic monomer, olefinic urethane reaction product of an isocyanate-functional prepolymer and a hydroxy-functional monomer, phosphorus-containing compounds, an oxidizing agent and a free radical source.

U.S. Patent No. 5,641,834 ("the '834 patent") and U.S. Patent No. 5,710,235, both incorporated herein by reference, disclose adhesives that include as tougheners an olefinic-terminated polyalkadiene that includes carboxy ester linking groups and at least one nascent secondary hydroxyl group that is capped with a monoisocyanate. These tougheners represented by the formulae for polymer A or polymer B in claim 1 are referred to herein as "olefinic-terminated liquid elastomer produced from a hydroxyl-terminated polyalkadiene" or, alternatively, as "isocyanate-capped methacrylate-terminated polyalkadiene produced from a hydroxyl-terminated polyalkadiene". The composition also includes a free radical-polymerizable monomer such as an olefinic monomer and, optionally, a second polymeric material. In a preferred embodiment the composition is an adhesive that also includes a phosphorus-containing compound and an ambient temperature-active redox catalyst. The '834 patent describes polymers A and B with a number average molecular weight of about 1,500 to 10,000, preferably about 1,500 to 6,000.

Peel strength and failure mode of the above-described prior structural adhesives leave room for improvement.

U.S. Patent No. 5,728,759 ("the '759 patent") discloses non-structural waterbased pressure sensitive adhesives and methods of preparation including an adhesive entity, a tackifier resin, a plasticizer, stabilizer, curing entity and optional additives. Objects of the '759 patent include providing masking tapes that do not freeze to an automobile body or window on exposure of the tapes to relatively high temperatures while in contact with such surfaces. Elastomeric block copolymers usable in the adhesive entity include block copolymers "EUROPRENE^{™} Sol T 193" from Enichem AMERICAS.

U.S. Patent No. 5,500,293 is directed to a non-structural adhesive composition suitable for use in an insulating tape having improved plasticizer resistance, including from about 13% to about 42% of a polyisoprene homopolymer, from about 13% to about 42% of a styrene-isoprene-styrene copolymer, and from about 25% to about 55% of an aliphatic tackifying agent. The styrene-isoprene-styrene copolymers disclosed include EUROPRENE^{™}.

Additional important features of acrylic adhesives are surface tack and open time.

As used herein, "surface tack" means the amount of adhesive on an exposed surface of the applied adhesive that does not undergo curing. Such uncured adhesive can be transferred to other parts of the assembly or to the application equipment resulting in increasing clean-up costs. A common cause of surface tack is referred to as "air inhibition" since atmospheric oxygen is a powerful inhibitor of free radical reactions. Accordingly, the amount of surface tack can be measured by determining the thickness of any uncured adhesive on the surface.

US-A-4223115 describes an adhesive composition including a free radical monomer; a phosphorus containing compound as an adhesion promoter; a low molecular weight toughener formed from an olefinic urethane reaction product of an isocynanate-functional prepolymer and a hydroxy functional monomer; an elastomer (Hycar® 1072) as a high molecular weight toughener and a reducing agent and an oxidising agent.

In typical applications of two-part reactive adhesive systems, the two parts are mixed together, the mixed material is applied to a first substrate for bonding then a second substrate is contacted to the adhesive-applied first substrate. The time required for such mixing, applying and contacting is referred to herein as "open time". Of course, the substrates must be contacted together prior to final cure of the adhesive.

Although the surface tack and open time of acrylic adhesives commercially available from Lord Corporation are more than adequate for many applications these characteristics could be improved.

### SUMMARY OF THE INVENTION

Accordingly, it is an object of the invention to provide an adhesive with improved peel strength, improved failure mode and improved air inhibition or surface tack resistance for a longer period of open time.

It is yet another object of the invention to provide an adhesive that incorporates cost effective tougheners while maintaining high T-peel strength and improved failure mode.

One embodiment of the first invention is directed to a composition suitable for use in an adhesive system comprising:
(a) 10-90% by weight of at least one free radical-polymerizable monomer;
(b) 0-20% by weight of an adhesion promoter,
(c) 10-80% by weight of a primary low molecular weight toughener characterized as an olefinic-terminated liquid elastomer based on homopolymers of butadiene or copolymers of butadiene and at least one monomer copolymerizable therewith, or butadiene homopolymers and copolymers modified by copolymerisation therewith of trace amounts of up to 5 percent by weight of the elastomer of at least one functional monomer, with said primary low molecular weight toughener having a weight average molecular weight (M_{w}) less than 18,000 or a number average molecular number (Mₙ) less than 10,000 and:
(d) 1-15% by weight of an auxiliary high molecular weight toughener with a M_{w} greater than 18,000 or a Mₙ greater than 10,000 wherein the weight percents are based on the total weight of components (a) - (d) whereby the solubility in said monomer of component (c) is greater than the solubility of component (d).

According to a preferred embodiment of the invention there is provided an adhesive composition having improved air inhibition or surface tack resistance and extended open time that includes components (a) - (d) above and at least one reducing agent (e) having the formula (1) 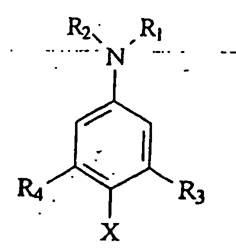 wherein each of R₁ and R₂, which may be the same or different, is independently selected from the group consisting of linear or branched, saturated or unsaturated, C1-C10 alkyl and linear or branched, saturated or unsaturated, C1-C10 hydroxyalkyl (i.e.. alkyl substituted by -OH);
each of R₃ and R₄ is independently selected from the group consisting of hydrogen and linear or branched, saturated or unsaturated C1-C10 alkyl; and
X is halogen;
and at least one oxidizing agent (f) that is co-reactive with the reducing agent in an amount effective to generate free radicals and to initiate and propagate polymerization of the free radical polymerizable liquid monomer.

### DETAILED DESCRIPTION OF THE INVENTION

In working with acrylic adhesives including low molecular weight tougheners, applicants discovered that such adhesives exhibit inferior T-peel strength. Surprisingly, applicants were able to solve this problem by including relatively small amounts of inexpensive high molecular weight tougheners with a M_{w} of more than about 18,000 in the adhesive formulation. One of ordinary skill in the art would not have expected such a low percentage of a high molecular weight toughener such as EUROPRENE^{™}, typically used as a tackifier in non-structural adhesives, to provide substantial improvements in peel strength and failure mode. Moreover, previous adhesives incorporating polymers such as polychloroprene, polymer-in-monomer syrup, and chlorosulphonated polyethylene rubber are typically brittle. Another surprising advantage associated with the incorporation of high molecular weight tougheners is that good T-Peel strength is observed even when the less expensive isocyanate-capped methacrylate-terminated polyalkadiene produced from a hydroxyl-terminated polyalkadiene toughener is used instead of the more expensive and higher odor isocyanate-capped methacrylate-terminated polyalkadiene produced from a carboxyl acid-terminated polyalkadiene toughener.

As used herein, the "principal components" of the invention are at least one free radical -polymerizable monomer, an optional adhesion promoter, at least two tougheners, an oxidizing agent and a reducing agent.

The invention includes about 10-90 % by weight of the principal components of at least one free radical-polymerizable monomer. Free radical-polymerizable monomers in accordance with the invention are olefinic monomers that are characterized by the presence of a -C=C- group. Representative olefinic monomers include esters of (meth)acrylic acid such as methyl methacrylate, ethyl methacrylate, butyl methacrylate, methyl acrylate, butyl acrylate, cyclohexyl acrylate, hexyl acrylate, 2-ethylhexyl acrylate, lauryl acrylate, ethyl acrylate, diethylene glycol dimethacrylate, dicyclopentadienyloxyethyl methacrylate, cyclohexyl methacrylate, lauryl methacrylate, glycidyl methacrylate and tetrahydrofurfuryl methacrylate; methacrylic acid; acrylic acid; substituted (meth)acrylic acids such as itaconic acid, acrylonitrile, methacrylonitrile, acrylamide and methacrylamide; styrene; substituted styrenes such as vinyl styrene, chlorostyrene, methyl styrene and n-butyl styrene; vinyl acetate; vinylidene chloride; and butadienes such as 2,3-dichloro-1,3-butadiene and 2-chloro-1,3-butadiene. Other olefinic monomers include maleate esters; fumarate esters; and styrenic compounds such as styrene, chlorostyrene, methylstyrene, butylstyrene and vinyl styrene. Tetrahydrofurfuryl methacrylate (THFMA), methacrylic acid and methyl methacrylate are most preferred.

The invention also can include 0-20% by weight of the principal components of an adhesion promoter. An adhesion promoter in accordance with the present invention is any adhesion promoter known to those of ordinary skill in the art as useful in promoting adhesion in acrylic adhesives. Preferred adhesion promoters in accordance with the present invention are phosphorus-containing compounds that enhance metal adhesion and may be any derivative of phosphinic acid, phosphonic acid or phosphoric acid having at least one P-OH group and at least one organic moiety characterized by the presence of an olefinic group, which is preferably terminally located. A listing of such phosphorus compounds is found in U.S. Pat. No. 4,223,115. A preferred phosphorus-containing compound has a structure that may be represented by the formula: 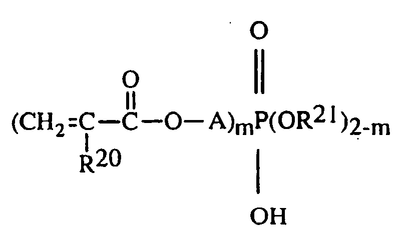 wherein R²⁰ is selected from the group consisting of hydrogen, an alkyl group having from one to 8, preferably one to 4, carbon atoms, and CH₂CH-; R²¹ is selected from the group consisting of hydrogen, an alkyl group having from one to 8, preferably one to 4 carbon atoms; A is selected from the group consisting of -R²²O- and R²³O)ₙ, wherein R²² is an aliphatic or cycloaliphatic alkylene group containing from one to 9, preferably 2 to 6, carbon atoms; R²³ is an alkylene group having from one to 7, preferably 2 to 4, carbon atoms; n is an integer from 2 to 10, and m is one or 2, preferably one.

Phosphorus-containing compounds having vinyl unsaturation are preferred over such compounds having allylic unsaturation, with monoesters of phosphinic, phosphonic and phosphoric acids having one unit of vinyl or allylic, especially vinyl, unsaturation presently being preferred. Representative phosphorus-containing compounds include, without limitation, phosphoric acid; 2-methacryloyloxyethyl phosphate; bis-(2-methacryloxyloxyethyl) phosphate; 2-acryloyloxyethyl phosphate; bis-(2-acryloyloxyethyl) phosphate; methyl-(2-methacryloyloxyethyl) phosphate; ethyl methacryloyloxyethyl phosphate; methyl acryloyloxyethyl phosphate; ethyl acryloyloxyethyl phosphate; compounds of the above formula wherein R⁸ is hydrogen or methyl and R⁹ is propyl, isobutyl, ethylhexyl, halopropyl, haloisobutyl or haloethylhexyl; vinyl phosphonic acid; cyclohexene-3-phosphonic acid; alphahydroxybutene-2 phosphonic acid; 1-hydroxy-1-phenylmethane-1,1-diphosphonic acid; 1-hydroxy-1-methyl-1-disphosphonic acid: 1-amino-1 phenyl-1,1-diphosphonic acid; 3-amino-1-hydroxypropane-1,1-disphosphonic acid; amino-tris (methylenephosphonic acid); gamma-amino-propylphosphonic acid; gamma-glycidoxypropylphosphonic acid; phosphoric acid-mono-2-aminoethyl ester; allyl phosphonic acid; allyl phosphinic acid; β-methacryloyloxyethyl phosphinic acid; diallylphosphinic acid; β-methacryloyloxyethyl) phosphinic acid and allyl methacryloyloxyethyl phosphinic acid. A most preferred adhesion promoter is 2-hydroxyethylmethacrylate phosphate.

The first embodiment of the invention includes about 10-80% by weight of the principal components of low molecular weight toughener. A low molecular weight toughener in accordance with the present invention has a M_{w} of less than about 18,000 or Mₙ less than about 10,000. The toughening agent provides improved impact and shatter resistance to the resultant adhesive and decreases brittleness. The polymeric material is a liquid olefinic-terminated elastomers as described in U.S. Patent Nos. 4,223,115; 4,452,944; 4,769,419; 5,641,834 and 5,710,235.

Representative liquid olefinic-terminated elastomers disclosed in P.C.T. Publication WO 97/39074 include homopolymers of butadiene, copolymers of butadiene and at least one monomer copolymerizable therewith, for example, styrene, acrylonitrile, methacrylonitrile (e.g. poly(butadiene-(meth)acrylonitrile or poly(butadiene-(meth)acrylonitrile-styrene) and mixtures thereof; as well as modified elastomeric polymeric materials, such as butadiene homopolymers and copolymers as noted above modified by copolymerization therewith of trace amounts of up to about 5 percent by weight of the elastomeric material of at least one functional monomer (such as acrylic acid, methacrylic acid, maleic anhydride, fumaric acid, styrene, and methyl methacrylate to give, for example, methacrylate-terminated polybutadiene homopolymers and/or copolymers).

The most preferred toughener in accordance with the present invention is an olefinic-terminated liquid elastomer produced from a hydroxyl-terminated polyalkadiene as described in the '834 patent. It is preferred over more expensive tougheners such as a urethane modified olefinic-terminated liquid elastomer produced from a carboxylic acid-terminated alkadiene as described in the '419 patent.

The first embodiment of the invention also includes about 1-15% by weight of the principal components, preferably 1-10% by weight of the principal components, and more preferably about 1-5% by weight of the principle components of a high molecular weight toughener. A high molecular weight toughener in accordance with the present invention has a M_{w} of greater than about 18,000 or a Mₙ greater than about 10,000. Surprisingly, it has been determined that the use of at least a minor amount of a high molecular weight toughener results in adhesive formulations with substantially improved T-peel strength and improved failure mode from adhesive to cohesive. The high molecular weight toughener of the present invention can be, for example, an A-B-A block copolymer wherein the A block is polystyrene, alpha-methyl styrene, t-butyl styrene, or other ring alkylated styrenes as well as mixtures of some or all of the above and the B block is an elastomeric segment having a low Tg such as that derived from a conjugated diene or an ethylene-propylene monomer. Commercially available examples include EUROPRENE SOL T 193A^{™} available from Enichem Elastomers Americas, Inc. Other high molecular weight tougheners in accordance with the present invention include, for example, block copolymers and random copolymers including but not limited to polyethylene, polypropylene, styrene-butadiene, polychloroprene, EPDM, chlorinated rubber, butyl rubber, styrene/butadiene/acrylonitrile rubber and chlorosulfonated polyethylene.

Although applicants are not bound by any particular theory, it is believed that small amounts of high molecular weight auxiliary tougheners such as EUROPRENE^{™} alter the morphology of the cured adhesive. These auxiliary tougheners have, for example, marginal solubility in the monomer (i.e. solubility less than the primary toughener) which may be a result of, for example, the combined properties of high molecular weight, structure of the chain, structure of the end groups and monomer solvency. It is believed that adding a combination of tougheners with varied solubilities results in a desirable micro phase separation of rubber oligomer, that in turn enhances the toughness of the adhesive.

The invention may also include an ambient temperature reactive catalyst system. The ambient temperature-reactive catalyst systems that may be employed in the preferred adhesive systems are well-known redox couple systems and need not be discussed herein in detail. Basically, such systems comprise at least one oxidizing agent and at least one reducing agent which are co-reactive at room temperature to generate free radicals effective to initiate addition polymerization reactions and cure the adhesive. Substantially any of the known oxidizing and reducing agents which are so co-reactive can be employed. Representative oxidizing agents include, without limitation, organic peroxides, such as benzoyl peroxide and other diacyl peroxides, hydroperoxides such as cumene hydroperoxide, peresters such as β-butylperoxybenzoate; ketone hydroperoxides such as methyl ethyl ketone hydroperoxide, organic salts of transition metals such as cobalt naphthenate, and compounds containing a labile chlorine such as sulfonyl chloride. Representative reducing agents include, without limitation, sulfinic acids; azo compounds such as azoisobutyric acid dinitrile; alpha-aminosulfones such as bis(tolysulfonmethyl)-benzyl amine; tertiary amines such as diisopropanol-p-toluidine (DI1PT), dimethyl aniline, p-halogenated aniline derivatives and dimethyl-p-toluidine; and aminealdehyde condensation products, for example, the condensation products of aliphatic aldehydes such as butyraldehyde with primary amines such as aniline or butylamine. The use of known accelerators and promoters with the redox couple catalyst systems can be advantageous. Preferably, the oxidizing agent will be present in an amount in the range from about 0.5 to about 50 percent by weight of bonding accelerator, with the amount of reducing agent being in the range from about 0.05 to about 10 preferably about 0.1 to about 6, percent by weight of polymerizable adhesive composition. DIIPT is a preferred reducing agent. The most preferred oxidizing agent is benzoyl peroxide.

According to one preferred embodiment of the invention it has been found that the surface tack and open time unexpectedly improves by utilizing a certain reducing agents. These reducing agents are p-halogenated aniline derivatives having the formula (I) 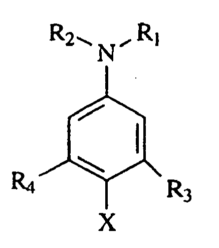 wherein each of R₁ and R₂, which may be the same or different, is independently selected from the group consisting of linear or branched, saturated or unsaturated, C1-C10 alkyl and linear or branched, saturated or unsaturated, C1-C10 hydroxyalkyl (i.e., alkyl substituted by -OH);
each of R₃ and R₄ is independently selected from the group consisting of hydrogen and linear or branched, saturated or unsaturated C1-C10 alkyl; and
X is halogen.

In a preferred embodiment of formula (I), each of R₁ and R₂ is independently selected from the group consisting of C1 - C4 alkyl and C1 - C4 hydroxyalkyl, and more preferably each of R₁ and R₂ are the same and are methyl or isopropanol; each of R₃ and R₄ is hydrogen; and X is fluorine, chlorine, bromine, or iodine, and more preferably chlorine or bromine. Exemplary reducing agents invention include, but are not limited to, N, N-diisopropanol-p-chloroaniline: N, N-diisopropanol-p-bromoaniline; N, N-diisopropanol-p-bromo-m-methylaniline; N, N-dimethyl-p-chloroaniline; N, N-dimethyl-p-bromoaniline; N, N-diethyl-p-chloroaniline; and N, N-diethyl-p-bromoaniline.

Although the adhesive of the present invention may take many forms, the most preferred adhesive systems are provided as multipack or two-part adhesive systems where one package or part contains the polymerizable or reactive components and the reducing agent and a second package or part contains the oxidizing agent. The two parts are mixed together at the time of use in order to initiate the reactive cure. After mixing the individual packages, one or both surfaces to be joined are coated with the mixed adhesive system and the surfaces are placed in contact with each other.

The second package can include a bonding activator that includes the oxidizing agent for the redox catalyst system. The bonding activator can include:
(1) from about 0.5 to about 50 percent by weight based on total weight of bonding activator of at least one oxidizing agent which can function as an oxidant of a redox couple catalyst system; and
(2) from about 30 to about 99.5 percent by weight, based on total weight of bonding accelerator, of a carrier vehicle.

The carrier vehicles which are suitable for use in the bonding activators can be a simple inert solvent or diluent such as methylene chloride, or butyl benzyl phthalate, including mixtures of such solvents or diluents. The carrier vehicle should contain no more than 5% by weight of any moiety which is reactive with the oxidizing agent at room temperature. The carrier vehicle can be a more complex mixture including at least one film-forming binder in addition to inert solvent or diluent. The carrier vehicle can contain, in addition to solvent or solvent and film-forming binder, additives such as external plasticizers, flexibilizers, suspenders and stabilizers, providing that any such additives do not unacceptably adversely affect the stability of the activator composition.

An exemplary two part system includes:
(I) a first package comprising
   (a) 10-90, preferably 20-70, weight percent of an olefinic monomer selected from the group consisting of (meth)acrylic acid; esters, amides or nitriles of (meth)acrylic acid; maleate esters; fumerate esters; vinyl esters; conjugated dienes; itaconic acid; styrenic compounds; and vinylidene halides;
   (b) 10-80, preferably 20-50, weight percent of the primary toughener;
   (c) 1-15, preferably 1-10, weight percent of the auxiliary toughener;
   (d) 0-20, preferably 2-10, weight percent of a phosphorus-containing compound having one or more olefinic groups
   (e) 0.05-10, preferably 0.1-6, weight percent of at least one reducing agent which is interactive with an oxidizing agent to produce free radicals which are capable of initiating and propagating free radical polymerization reactions; and
(II) a second package comprising
   a bonding activator containing an oxidizing agent of a room temperature-active redox couple catalyst system, the oxidizing agent being reactive at room temperature with agent (e) when the first and second packages are mixed to produce free radicals which are capable of initiating and propagating free radical polymerization, the amount of the oxidizing agent being sufficient to interact with agent (e),
wherein the weight percents are based on the total amount of the principal components.

The adhesive systems of the invention may be used to bond metal surfaces, such as steel, aluminum and copper, to a variety of substrates, including metal, plastics, and other polymers, reinforced plastics, fibers, glass, ceramics, wood and the like. It is a feature of the present invention that the herein-described adhesive compositions can be employed to bond metal substrates such as steel, aluminum and copper with little, if any, pretreatment of the metal surface prior to application of the adhesive. Thus, bonding can be effected even to oily metal surfaces which are otherwise clean without an extensive pretreatment as is usually required with the vast majority of currently available primers and adhesives. Additionally, the adhesive systems of this invention provide effective bonding at room temperature, thus heat is not required either for applying the adhesive systems to the substrates or for curing.

Although the adhesives of the present invention are preferred for bonding metal surfaces, the present adhesive compositions may be applied as an adhesive, primer or coating to any surface or substrate capable of receiving the adhesive. The metals which are preferred for bonding with the present adhesives include zinc, copper, cadmium, iron, tin, aluminum, silver, chromium, alloys of such metals, and metallic coatings or platings of such metals such as galvanized steel including hot dipped, electrogalvanized steel and galvanealed steel.

The adhesive coatings may be brushed, rolled, sprayed, dotted, knifed or otherwise applied to one substrate, but preferably to both substrates to desired thickness preferably not to exceed 60 mils. The substrates may be clamped for firmness during cure in those installations where relative movement of the two substrates might be expected. For example, to adhere metal surfaces, an adherent quantity of the adhesive composition is applied to one surface, preferably to both surfaces, and the surfaces are confronted with the adhesive composition therebetween. The adhesive should have a thickness less than 60 mils for optimum results. The smoothness of the surfaces and their clearance (e.g., in the case of nuts and bolts) will determine the required film thickness for optimum bonding. The two metal surfaces and the interposed adhesive composition are maintained in engagement until the said adhesive composition has cured sufficiently to bond the said surfaces.

The following examples are provided for illustration purposes only and are not intended to limit the scope of the invention in any manner.

### EXAMPLES

The following masterbatch was prepared:

| Material | | Parts by Weight |
|---|---|---|
| Tetrahydrofurfurylmethacrylate (THFMA) | | 16.88 |
| Monomethacryloyloxyethyl phthalate | | 2.21 |
| 2-hydroxyethylmethacrylate phosphate | | 3.11 |
| isocyanate-capped methacrylate-tenninated butadiene oligomer produced from a hydroxyl-terminated polybutadiene as described in the '834 patent (in 20% THFMA) | | 44.65 |
| Wollastonite | | 8.00 |
| Silica | | 4.50 |
| Titania | | 2.65 |
| DIIPT | | 1.00 |
| Chloroanilic acid | | 0.002 |
| Inhibitor (ETHANOX- 330 from Albemarle Corp.) | | 0.003 |
| 0.2 mm glass beads | | 7.60 |
| | Total | 90.6 |

EUROPRENE^{™} was added to the masterbatch as set forth in the table below. The EUROPRENE^{™} polymer, EUROPRENE^{™} SOL T 193A, used was a commercial product of EniChem Elastomers Americas, Inc. EUROPRENE^{™} SOL T 193A is a terblock polymer of styrene and isoprene with polystyrene blocks (25 parts by weight) at the ends and polyisoprene block at the center (75 parts by weight). It is a rubbery solid polymer and has a pellet form. EUROPRENE^{™} SOL T 193A has a reasonable solubility in THFMA. A 20 part by weight solution of EUROPRENE^{™} SOL T 193A in THFMA has been used for formulation convenience.

**TABLE 1: EUROPRENE^{™} Ladder vs. T-Peel Property**

| Formulation | A | B | C | D |
|---|---|---|---|---|
| Ratio of primary toughener to auxiliary toughener EUROPRENE^{™} | 100/0 | 99/1 | 97/3 | 95/5 |
| master batch | 90.60 | 90.60 | 90.60 | 90.60 |
| 20% EUROPRENE^{™} | 0 | 1.88 | 5.64 | 9.40 |
| lsocyanate-capped methacrylate-terminated butadiene oligomer produced from a hydroxyl-terminated polybutadiene as described in the '834 patent | 2.35 | 1.88 | 0.94 | - |
| THFMA | 7.05 | 5.64 | 2.82 | - |
| Total | 100.00 | 100.00 | 100.00 | 100.00 |

The above four formulations were prepared 115g (4 oz.) polyethylene jars and allowed to age overnight. The formulations were loaded into two-part dispensing equipment (4:1 side A:side B mix ratio by volume). The curative (side B) used here was a benzoyl peroxide containing curing agent

The substrate (2.5 cm x 10 cm x 0.08 cm, or 1" x 4" x 0.032") tested was galvaneal steel. The coupons were bent one inch from the end to give a 90 degree angle. The coupons were treated with an aqueous lubricant (Chempet 4465 available from ADCHEM) with acid brush according to the following preparation for blank wash:
1. Add material with brush until even wetting of surface is maintained when brushing (horizontal).
2. Every five minutes, re-brush until all water has evaporated.
3. After water has evaporated, tilt coupons on about a 45 degree angle and let dry overnight (4 hour minimum).
4. Bond the upper part of the coupon away from drainage.

T-peel samples were assembled and allowed to cure at room temperature overnight, then postbaked at 165° (325°F) for 20 min., cooled at room temperature for 60 min., postbaked again at 120C° (250°F) for 30 min. After 4 hours of cooling at room temperature, T-peel test was performed on the Instron (Model 4204) at a 5.1 cm/min (2.0 in/min) at room temperature. The T-peel test results are shown below:

**TABLE II: EUROPRENE^{™} Ladder vs T-Peel (Strength) (kgm⁻¹ [pli])**

| Formulation | Versilok® 262 | A | B | C | D |
|---|---|---|---|---|---|
| Toughener ratio | - | 100/0 | 99/1 | 97/3 | 95/5 |
| Peel Strength | 1.98 [35.3] | 1.63 | 19.9 | 1.96 | 1.84 |
| | | [29.2] | [35.6] | [35.0] | [32.8] |
| Std. Dev. Of Peel | 0.143 [2.55] | 0.042 | 0.025 | 0.109 | 0.026 |
| Strength | | [0.75] | [0.44] | [1.95] | [0.47] |
| Failure Mode | COH/TCOH | ADH | ADH | COH | COH |

Versilok® 262 is a structural adhesive commercially available from Lord Corporation that does not include two distinct tougheners of different M_{w} or EUROPRENE. "COH" designates cohesive (substrate) failure, "TCOH" designates a thin layer of cohesive (substrate) failure and "ADH" designates adhesive failure.

Surprisingly, it was observed that (1) incorporating as little as 1% EUROPRENE^{™} in the masterbatch improves T-peel strength and (2) incorporation of ≥3% EUROPRENE^{™} in the formulation improves failure mode from adhesive to cohesive.

In the next experiment, 3% EUROPRENE^{™} was introduced into several formulations that have good T-peel strength, but poor failure mode. These formulations include three tougheners. Formulations E, E', F, F', G, G', H and H' were prepared with the following ingredients:

**TABLE III: Formulations of Examples E-H**

| Ingredient | E | E' | F | F' | G | G' | H | H' |
|---|---|---|---|---|---|---|---|---|
| THFMA | 23.29 | 23.29 | 24.33 | 24.33 | 23.55 | 23.55 | 25.79 | 25.79 |
| Monomethacryloyloxyethyl phthalate | 2.21 | 2.21 | 2.21 | 2.21 | 2.21 | 2.21 | 2.21 | 2.21 |
| 2-Hydroxyethylmethacrylate phosphate | 3.1 | 3.1 | 3.1 | 3.11 | 3.1 | 3.1 | 3.1 | 3.11 |
| '834 patent toughener in 20% THFMA | 47.00 | 45.6 | 37.60 | 37.60 | 44.65 | 44.65 | 23.50 | 23.50 |
| '419 patent toughener in 10% methacrylate | 0 | 0 | 8.36 | 8.36 | 2.1 | 2.11 | 0 | 0 |
| '419 patent toughener in 10% THFMA | 0 | 0 | 0 | 0 | 0 | 0 | 21.0 | 21.0 |
| EUROPRENE^{™} in 20% THFMA | 0 | 5.60 | 0 | 5.80 | 0 | 5.80 | 0 | 5.80 |
| Wollastonite | 8.0 | 8.0 | 8.0 | 8.0 | 8.0 | 8.0 | 8.0 | 8.0 |
| Silica | 5.14 | 5.14 | 5.14 | 5.14 | 5.14 | 5.14 | 5.14 | 5.14 |
| Titania | 2.65 | 2.65 | 2.65 | 2.65 | 2.65 | 2.65 | 2.65 | 2.65 |
| DIIPT | 1.00 | 1.00 | 1.00 | 1.00 | 1.00 | 1.00 | 1.00 | 1.00 |
| Stabilizer | 0.002 | 0.002 | 0.002 | 0.002 | 0.002 | 0.002 | 0.002 | 0.002 |
| Stabilizer II | 0.003 | 0.003 | 0.003 | 0.003 | 0.003 | 0.003 | 0.003 | 0.003 |
| 0.2 mm glass beads | 7.60 | 7.60 | 7.60 | 7.60 | 7.60 | 7.60 | 7.60 | 7.60 |
| Total Parts by weight | 100.0 | 103.2 | 100.0 | 105.8 | 100.0 | 105.8 | 100.0 | 105.8 |

The T-peel properties of these formulations and Versilok® 262 were then evaluated.

**TABLE IV: Toughener Composition vs. T-Peel Performance**

| Formulation | T-peel (kgm-1 [pli]) | Fail.Mode with Europrene^{™} | Failure Mode without Europrene^{™} |
|---|---|---|---|
| Versilok® 262 | 1.96 [35.1] | - | 50% coh/ 50%/tcoh |
| E | 1.51 [26.9] | - | 50%coh/50% adh |
| E' | 1.99 [34.6] | coh | - |
| F | - | - | tcoh |
| F' | 2.06 [36.9] | Mostly coh/some tcoh | - |
| G | - | - | adh |
| G' | 1.86 [33.3] | 50% coh/50% adh | - |
| H | - | - | adh |
| H' | 2.07 [37.0] | Mostly coh/some adh | - |

It was observed that peel failure mode of formulation F was improved from 100% thin cohesive to most cohesive and some thin cohesive, formulations G and H were improved significantly from 100% adhesive to most cohesive to small amount of adhesive. It was surprising that such small amounts of an additive such as EUROPRENE^{™} with marginal solubility could alter T-peel strength and failure mode to such a great extent.

The effect of high molecular weight auxiliary toughening agent on the peel strength of the cured adhesive was further demonstrated by preparation of the following:

**MASTER BATCH:**

| Material | | Parts by Weight |
|---|---|---|
| Tetrahydrofurfurylmethacrylate (THFMA) | | 14.22 |
| Monomethacryloyloxyethyl phthalate | | 2.21 |
| 2-hydroxyethylmethacrylate phosphate | | 3.11 |
| isocyanate-capped methacrylate-terminated butadiene oligomer produced from a hydroxyl-terminated polybutadiene as described in the '834 patent (in 20% THFMA) - (approximately 280 days old) | | 45.53 |
| Wollastonite | | 8.00 |
| Silica | | 4.00 |
| Titania | | 2.65 |
| DIIPT | | 1.30 |
| Stabilizer I | | 0.003 |
| Stabilizer II | | 0.004 |
| alpha methyl styrene | | 0.070 |
| 0.2 mm glass beads | | 7.60 |
| | Total | 88.7 |

Auxiliary tougheners were added (5% by weight) dissolved in THFMA (20% parts by weight of toughener in solvent). Peel strengths of the cured adhesives were measured and tabulated.

**TABLE V. Effect of auxiliary toughener composition on master batches prepared with primary toughening agent of '834 patent.**

| **Auxiliary Toughener** | **Mₙ² Dattons** | **M_{w}³ Daltons** | **Supplier and/or composition** | **T-Peel (kgm⁻¹ [pli])** |
|---|---|---|---|---|
| No Auxiliary - Primary Toughener | | | Toughening Agent '834 - Less | 1.51 [26.9] |
| '834 (Comparative Example 1) | | | than 180 days old | |
| No Auxiliary - Primary Toughener | 5,720 | 17,300 | Toughening Agent of '834 - | 1.79 [31.9] |
| -'834 (Comparative Example J) | | | Approximately 280 days old | |
| Europrene 193A, (Example K) | 119,000 | 149,000 | EniChem Elastomers | 2.08 [37.1] |
| Styrene-isoprene-styrene block copolymer | | | Americas, Inc, .25 styrene, .75 isoprene | |
| M_{w}¹ = 138,000-152,000 | | | | |
| Europrene 190 (Example L) | 143,000 | 185,000 | Enichem Elastomers | 2.00 [35.8] |
| M_{w}¹ = 155,000-185,000 | | | Americas. Inc .16 styene, .84 isoprene | |
| Europrene 9113 (Example M) | 136,000 | 148,000 | EniChem Elastomers | 2.12 [37.8] |
| M_{w}¹ = 135.000-150.000 | | | Americas, Inc .18 styrene, 82 isoprene | |
| Europrene 193B (Example N) | 107,000 | 130,000 | EniChem Elastomers | 2.17 [38.7] |
| M_{w}¹ = 120,000 -140,000 | | | Americas. Inc. .25 styrene .75 isoprene | |
| Polybutadiene (Example 0) | 21,900 | 418,000 | Aldrich | 2.06 [36.9] |
| Kraton D1102 (Example P) | 92,200 | 105,000 | Shell | 2.09 [37.4] |
| Styrene butadiene block copolymer | | | | |
| Neoprene - Polychloroprene (Ex. Q) | 25,900 | 457,000 | DuPont | 2.03 [36.2] |
| Hypalon 20 - (Example R) | 23,800 | 226,000 | DuPont | 1.84 [32.8] |
| Chlorosulfonated polyethylene | | | | |
| Nipol 1312V (Comparative Example S) | 3,160 | 8.320 | Zeon Chemicals, Inc | 1.61 [28.8] |
| Styrene-butadiene random copolymer | | | | |
| Ricon 131 - Maleated butadiene | 8,690 | 12,100 | Ricon Chemicals | 1.73 [31.0] |
| (Comparative Example T) | | | | |

| | | | | |
|---|---|---|---|---|
| ¹M_{w} provided by supplier ²Mₙ measured by Lord Corp. ³M_{w} measured by Lord Corp. | | | | |

The measured values of peel strength show that when the weight averaged molecular weight of the auxiliary toughener exceeds a value of approximately 18,000 and the number average exceeds a value of approximately 10,000 the peel strength of the resulting cured adhesive unexpectedly improves. This effect is not observed for the lower molecular weight auxiliary tougheners (Comparative Example S and Comparative Example T).

## Claims

1. A composition suitable for use in an adhesive system comprising:
(a) 10-90% by weight of at least one free radical-polymerizable monomer,
(b) 0-20% by weight of an adhesion promoter,
(c) 10-80% by weight of a primary low molecular weight toughener **characterized** as an olefinic-terminated liquid elastomer based on homopolymers or copolymers of butadiene with a weight average molecular weight (M_{w}) less than 18,000 or a number average molecular number (Mₙ) less than 10,000 and:
(d) 1-15% by weight of an auxiliary high molecular weight toughener with a M_{w} greater than 18,000 or a Mₙ greater than 10,000 wherein the weight percents are based on the total weight of components (a) - (d) whereby the solubility in said monomer of component (c) is greater than the solubility of component (d).

2. A composition according to claim 1 wherein the primary toughener comprises an olefinic-terminated liquid elastomer produced from a hydroxyl-terminated polyalkadiene.

3. A composition according to claim 1 wherein the auxiliary toughener comprises an A-B-A block copolymer wherein the A block is selected from styrene, ring alkylated styrene or a mixture thereof and the B block is an elastomeric segment have a low T_{g} selected from conjugated diene or ethylene-propylene.

4. A composition according to claim 3 wherein the auxiliary toughener is present in an amount of 1 to 10 weight percent.

5. A composition according to claim 3 wherein the primary toughener comprises an olefinic-terminated liquid elastomer produced from a hydroxyl-terminated polyalkadiene.

6. A two-part, reactive structural adhesive comprising:
(a) a first part comprising:
(i) 10-90% by weight of at least one free radical-polymerizable monomer;
(ii) 0-20% by weight of an adhesion promoter,
(iii) 10-80% by weight of a primary low molecular weight toughener **characterized** as an olefinic-terminated liquid elastomer based on homopolymers or copolymers of butadiene with a weight average molecular weight (M_{w}) less than 18,000 or a number average molecular number (Mₙ) less than 10,000;
(iv) 1-15% by weight of an auxiliary high molecular weight toughener with a M_{w} greater than 18,000 or a Mₙ greater than 10,000 wherein the weight percents are based on the total weight of components (i) - (iv) whereby the solubility in said monomer of component (iii) is greater than the solubility of component (iv); and
(v) at least one reducing agent; and
(b) a second part comprising an oxidizing agent that is reactive at room temperature with the reducing agent to produce free radicals that are capable of initiating and propagating free radical polymerisation.

7. An adhesive according to claim 6 wherein the primary toughener comprises an olefinic-terminated liquid elastomer produced from a hydroxyl-terminated polyalkadiene.

8. An adhesive according to claim 6 wherein the auxiliary toughener comprises an A-B-A block copolymer wherein the A block is selected from styrene, ring alkylated styrene or a mixture thereof and the B block is an elastomeric segment having a low T_{g} selected from conjugated diene or ethylene-propylene.

9. An adhesive according to claim 6 wherein the auxiliary toughener is present in an amount of 1 to 10 weight percent.

10. An adhesive according to claim 8 wherein the primary toughener comprises an olefinic-terminated liquid elastomer produced from a hydroxyl-terminated polyalkadiene.

11. An adhesive according to claim 6 wherein the reducing agent has a formula (I) 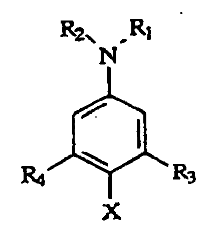 wherein each of R₁ and R₂, which may be the same or different, is independently selected from the group consisting of linear or branched, saturated or unsaturated, C1-C10 alkyl and linear or branched, saturated or unsaturated, C1-C10 hydroxyalkyl;
each of R₃ and R₄ is independently selected from the group consisting of hydrogen and linear or branched, saturated or unsaturated C1-C10 alkyl; and X is halogen.

12. An adhesive according to claim 11 wherein the reducing agent is selected from N,N-diisopropanol-p-chloroaniline; N,N-diisopropanol-p-bromoaniline; N,N-diisoprepanol-p-bromo-m-methylaniline; N.N-dimethyl-p-chloroaniline; N,N-dimethyl-p-bromoaniline; N,N-diethyl-p-choloroaniline; and N,N-diethyl-p-bromoaniline.

13. An adhesive according to claim 11 wherein the primary toughener comprises an olefinic-terminated liquid elastomer produced from a hydroxyl-terminated polyalkadiene and the auxiliary toughener comprises an A-B-A block copolymer wherein the A block is selected from styrene, ring alkylated styrene or a mixture thereof and the B block is an elastomeric segment having a low T_{g} selected from conjugated diene or ethylene-propylene.

14. A composition according to claim 1 wherein the primary toughener is methacrylate-terminated polybutadiene.

## Patentansprüche

1. Zusammensetzung, die zur Verwendung in einem Haftmittelsystem geeignet ist, umfassend:
(a) 10 bis 90 Gew.-% mindestens eines radikalisch polymerisierbaren Monomers,
(b) 0 bis 20 Gew.-% eines Haftvermittlers,
(c) 10 bis 80 Gew.-% eines Primärschlagfestmachers mit niedrigem Molekulargewicht, der als flüssiges Elastomer mit olefinischer Endgruppe auf der Basis von Homopolymeren oder Copolymeren von Butadien mit einem Gewichtsmittel des Molekulargewichts (M_{w}) von weniger als 18000 oder einem Zahlenmittel des Molekulargewichts (Mₙ) von weniger als 10000 **gekennzeichnet** ist, und
(d) 1 bis 15 Gew.-% eines Hilfsschlagfestmachers mit hohem Molekulargewicht mit einem M_{w} von mehr als 18000 oder einem Mₙ von mehr als 10000, wobei die Gewichtsprozentangaben auf das Gesamtgewicht der Komponenten (a) bis (d) bezogen sind, wodurch die Löslichkeit der Komponente (c) in dem Monomer höher ist als die Löslichkeit der Komponente (d).

2. Zusammensetzung nach Anspruch 1, bei welcher der Primärschlagfestmacher ein flüssiges Elastomer mit olefinischer Endgruppe, das aus einem Polyalkadien mit Hydroxylendgruppe hergestellt ist, umfasst.

3. Zusammensetzung nach Anspruch 1, bei welcher der Hilfsschlagfestmacher ein A-B-A-Blockcopolymer umfasst, bei dem der A-Block aus Styrol, ringalkyliertem Styrol oder einem Gemisch davon ausgewählt ist, und der B-Block ein elastomeres Segment mit einer niedrigen T_{g} ist, das aus konjugiertem Dien oder Ethylen-Propylen ausgewählt ist.

4. Zusammensetzung nach Anspruch 3, bei welcher der Hilfsschlagfestmacher in einer Menge von 1 bis 10 Gew.-% vorliegt.

5. Zusammensetzung nach Anspruch 3, bei welcher der Primärschlagfestmacher ein flüssiges Elastomer mit olefinischer Endgruppe, das aus einem Polyalkadien mit Hydroxylendgruppe hergestellt ist, umfasst.

6. Zweikomponentenhaftmittel mit reaktiver Struktur, umfassend:
(a) eine erste Komponente, die
(i) 10 bis 90 Gew.-% mindestens eines radikalisch polymerisierbaren Monomers,
(ii) 0 bis 20 Gew.-% eines Haftvermittlers,
(iii) 10 bis 80 Gew.-% eines Primärschlagfestmachers mit niedrigem Molekulargewicht, der als flüssiges Elastomer mit olefinischer Endgruppe auf der Basis von Homopolymeren oder Copolymeren von Butadien mit einem Gewichtsmittel des Molekulargewichts (M_{w}) von weniger als 18000 oder einem Zahlenmittel des Molekulargewichts (Mₙ) von weniger als 10000 **gekennzeichnet** ist,
(iv) 1 bis 15 Gew.-% eines Hilfsschlagfestmachers mit hohem Molekulargewicht mit einem M_{w} von mehr als 18000 oder einem Mₙ von mehr als 10000, wobei die Gewichtsprozentangaben auf das Gesamtgewicht der Komponenten (i) bis
(iv) bezogen sind, wodurch die Löslichkeit der Komponente (iii) in dem Monomer höher ist als die Löslichkeit der Komponente (iv), und
(v) mindestens ein Reduktionsmittel umfasst, und
(b) eine zweite Komponente, die ein Oxidationsmittel umfasst, das bei Raumtemperatur mit dem Reduktionsmittel zur Erzeugung von Radikalen reaktiv ist, die eine radikalische Polymerisation initiieren und weiterführen können.

7. Haftmittel nach Anspruch 6, bei dem der Primärschlagfestmacher ein flüssiges Elastomer mit olefinischer Endgruppe, das aus einem Polyalkadien mit Hydroxylendgruppe hergestellt ist, umfasst.

8. Haftmittel nach Anspruch 6, bei dem der Hilfsschlagfestmacher ein A-B-A-Blockcopolymer umfasst, bei dem der A-Block aus Styrol, ringalkyliertem Styrol oder einem Gemisch davon ausgewählt ist, und der B-Block ein elastomeres Segment mit einer niedrigen T_{g} ist, das aus konjugiertem Dien oder Ethylen-Propylen ausgewählt ist.

9. Haftmittel nach Anspruch 6, bei dem der Hilfsschlagfestmacher in einer Menge von 1 bis 10 Gew.-% vorliegt.

10. Haftmittel nach Anspruch 8, bei dem der Primärschlagfestmacher ein flüssiges Elastomer mit olefinischer Endgruppe, das aus einem Polyalkadien mit Hydroxylendgruppe hergestellt ist, umfasst.

11. Haftmittel nach Anspruch 6, bei dem das Reduktionsmittel die Formel (I) 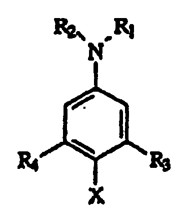 hat, worin jeder von R₁ und R₂, die gleich oder verschieden sein können, unabhängig aus der Gruppe bestehend aus linearem oder verzweigtem, gesättigtem oder ungesättigtem C1-C10-Alkyl und linearem oder verzweigtem, gesättigtem oder ungesättigtem C1-C10-Hydroxyalkyl ausgewählt ist,
jeder von R₃ und R₄ unabhängig aus der Gruppe bestehend aus Wasserstoff und linearem oder verzweigtem, gesättigtem oder ungesättigtem C1-C10-Alkyl ausgewählt ist, und X Halogen ist.

12. Haftmittel nach Anspruch 11, bei dem das Reduktionsmittel aus N,N-Diisopropanol-p-chloranilin, N,N-Diisopropanol-p-bromanilin, N,N-Diisopropanol-p-brom-m-methylanilin, N,N-Dimethyl-p-chloranilin, N,N-Dimethyl-p-bromanilin, N,N-Diethyl-p-chloranilin und N,N-Diethyl-p-bromanilin ausgewählt ist.

13. Haftmittel nach Anspruch 11, bei dem der Primärschlagfestmacher ein flüssiges Elastomer mit olefinischer Endgruppe, das aus einem Polyalkadien mit Hydroxylendgruppe hergestellt ist, umfasst, und der Hilfsschlagfestmacher ein A-B-A-Blockcopolymer umfasst, bei dem der A-Block aus Styrol, ringalkyliertem Styrol oder einem Gemisch davon ausgewählt ist, und der B-Block ein elastomeres Segment mit einer niedrigen T_{g} ist, das aus konjugiertem Dien oder Ethylen-Propylen ausgewählt ist.

14. Zusammensetzung nach Anspruch 1, bei welcher der Primärschlagfestmacher ein Polybutadien mit Methacrylat-Endgruppe ist.

## Revendications

1. - Composition appropriée pour être utilisée dans un système adhésif comprenant :
(a) 10-90% en poids d'au moins un monomère polymérisable par radicaux libres ;
(b) 0-20% en poids d'un promoteur d'adhésion ;
(c) 10-80% en poids d'un durcisseur principal de faible masse moléculaire **caractérisé** comme un élastomère liquide terminé par reste oléfinique à base d'homopolymères ou de copolymères de butadiène ayant une masse moléculaire moyenne en poids (M_{w}) inférieure à 18 000 ou une masse moléculaire moyenne en nombre (Mₙ) inférieure à 10 000 et ;
(d) 1-15% en poids d'un durcisseur auxiliaire de masse moléculaire élevée, ayant une M_{w} supérieure à 18 000 ou une Mₙ supérieure à 10 000, les pourcentages en poids étant basés sur la masse totale des composants (a) - (d), la solubilité dans ledit monomère de composant (c) étant supérieure à la solubilité du composant (d).

2. - Composition selon la revendication 1, dans laquelle le durcisseur principal comprend un élastomère liquide terminé par reste oléfinique obtenu à partir d'un polyalcadiène terminé par hydroxyle.

3. - Composition selon la revendication 1, dans laquelle le durcisseur auxiliaire comprend un copolymère à blocs A-B-A dans lequel le bloc A est choisi parmi le styrène, un styrène alkylé sur le noyau ou un mélange de ceux-ci, et le bloc B est un segment élastomérique ayant une basse Tg choisi parmi un diène conjugué ou un éthylène-propylène.

4. - Composition selon la revendication 3, dans laquelle le durcisseur auxiliaire est présent dans une quantité de 1 à 10 pour cent en poids.

5. - Composition selon la revendication 3, dans laquelle le durcisseur principal comprend un élastomère liquide terminé par reste oléfinique obtenu à partir d'un polyalcadiène terminé par hydroxyle.

6. - Adhésif structural réactif, à deux composants, comprenant :
(a) un premier composant comprenant :
(i) 10-90% en poids d'au moins un monomère polymérisable par radicaux libres ;
(ii) 0-20% en poids d'un promoteur d'adhésion ;
(iii) 10-80% en poids d'un durcisseur principal de faible masse moléculaire **caractérisé** comme un élastomère liquide terminé par reste oléfinique à base d'homopolymères ou de copolymères de butadiène avec une masse moléculaire moyenne en poids (M_{w}) inférieure à 18 000 ou une masse moléculaire moyenne en nombre (Mₙ) inférieure à 10 000;
(iv) 1-15% en poids d'un durcisseur auxiliaire de masse moléculaire élevée avec une M_{w} supérieure à 18 000 ou une Mₙ supérieure à 10 000, les pourcentages en poids étant basés sur la masse totale des composants (i) - (iv), la solubilité dans ledit monomère du composant (iii) étant supérieure à la solubilité du composant (iv) ; et
(v) au moins un agent réducteur ; et
(b) un second composant comprenant un agent oxydant qui est capable de réagir à la température ambiante avec l'agent réducteur pour produire des radicaux libres qui sont capables d'amorcer et de propager une polymérisation par radicaux libres.

7. - Adhésif selon la revendication 6, dans lequel le durcisseur principal comprend un élastomère liquide terminé par reste oléfinique obtenu à partir d'un polyalcadiène terminé par hydroxyle.

8. - Adhésif selon la revendication 6, dans lequel le durcisseur auxiliaire comprend un copolymère à blocs A-B-A dans lequel le bloc A est choisi parmi le styrène, un styrène alkylé sur le noyau ou un mélange de ceux-ci, et le bloc B est un segment élastomérique ayant une basse Tg choisi parmi un diène conjugué ou un éthylène-propylène.

9. - Adhésif selon la revendication 6, dans lequel le durcisseur auxiliaire est présent dans une quantité de 1 à 10 pour cent en poids.

10. - Adhésif selon la revendication 8, dans lequel le durcisseur principal comprend un élastomère liquide terminé par reste oléfinique, obtenu à partir d'un polyalcadiène terminé par hydroxyle.

11. - Adhésif selon la revendication 6, dans lequel l'agent réducteur a une formule (I) 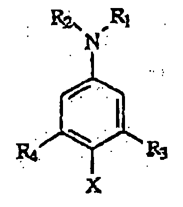 dans laquelle :
- R₁ et R₂, qui peuvent être identiques ou différents, sont chacun choisis indépendamment dans le groupe constitué par un alkyle en C₁-C₁₀ saturé ou insaturé, linéaire ou ramifié, et un hydr,oxyalkyle en C₁-C₁₀ saturé ou insaturé, linéaire ou ramifié ;
- R₃ et R₄ sont chacun choisis indépendamment dans le groupe constitué par un hydrogène et un alkyle en C₁-C₁₀ saturé ou insaturé, linéaire ou ramifié ; et
- X est un halogène.

12. - Adhésif selon la revendication 11, dans lequel l'agent réducteur est choisi parmi la N,N-diisopropanol-p-chloroaniline ; la N,N-diisopropanol-p-bromoaniline ; la N,N-diisopropanol-p-bromo-m-méthylaniline ; la N,N-diméthyl-p-chloroaniline ; la N,N-diméthyl-p-bromoaniline ; la N,N-diéthyl-p-chloroaniline ; et la N,N-diéthyl-p-bromoaniline.

13. - Adhésif selon la revendication 11, dans lequel le durcisseur principal comprend un élastomère liquide terminé par oléfinique obtenu à partir d'un polyalcadiène terminé par hydroxyle, et le durcisseur auxiliaire comprend un copolymère à blocs A-B-A dans lequel le bloc A est choisi parmi le styrène, un styrène alkylé sur le noyau ou un mélange de ceux-ci, et le bloc B est un segment élastomérique ayant une basse Tg choisi parmi un diène conjugué ou un éthylène-propylène.

14. - Composition selon la revendication 1, dans laquelle le durcisseur principal est un polybutadiène terminé par méthacrylate.
